# EUROPEAN PATENT SPECIFICATION

(11) **EP 0 787 936 B1**
(45) Date of publication and mention of the grant of the patent: **02.05.2003**
(21) Application number: 97105584.3
(22) Date of filing: 11.08.1994
(51) Int. Cl.: F16L 1/20, G05G 7/10, G05G 13/00, E21B 41/04, E21B 41/00, F16C 1/06

(54) **Interface system for connecting a remote-operated vehicle to subsea pipeline support**
Verbindungsstelle zum Anschluss eines ferngesteuerten Fahrzeugs an eine Stütze für Unterwasser-Pipelines
Système d'interface pour la connexion d'un véhicule télécommandé à un support de pipeline sous-marin

(30) Priority: 12.08.1993 BR 9303365
(43) Date of publication of application: 06.08.1997
(62) Divisional of application: 94305942.8
(73) Proprietor: PETROLEO BRASILEIRO S.A. - PETROBRAS, Rio de Janeiro (BR)
(72) Inventor: Dos Reis, Ney Robinson Salvi, Flamengo, Rio de Janeiro, RJ (BR); Da Cunha, Carlos Henrique Guimaraes, Piedade, Rio de Janeiro, RJ (BR)
(74) Representative: Barlow, Roy James

(56) References cited:
- EP-A- 0 347 389
- WO-A-93/01438
- FR-A- 2 363 724
- FR-A- 2 533 985
- US-A- 3 307 627
- US-A- 3 518 844

## Description

This invention is intended to provide an interface system that will enable centralization of all the points at which torque is usually applied to subsea equipment so that torque will be applied to the interface system at only one location. The invention is particularly applicable as regards equipment meant for oil prospecting and producing purposes.

Each of the points at which torque is applied is connected to the part to be remotely operated by means of a flexible device meant to transfer such torque.

With gas and oil being searched for in ever deeper waters, and since known techniques cannot cope at such depths, new ones had to be developed in lieu of the use of divers.

An example involves span-supporting systems for rigid subsea pipelines carrying the oil and gas produced. Such subsea pipelines have to be supported whenever any free span of pipe, arising out of the unevenness of the sea bed, is longer than that allowed for under the design.

The kind of conventional supporting system used until recently has had limited use because divers have had to be employed to do the work, as for example when torque had to be applied at predetermined points to raise the sliding supporting devices for rigid pipelines. In order to be able to support rigid pipelines at depths beyond those at which divers can work, new techniques are being developed that do not require the work of divers.

One of the solutions currently employed is to let down to the sea bed hydraulic units together with the mechanical rigid pipeline supports. Such hydraulic units provide the hydraulic power for the hydraulic motors installed close to the points where torque is to be applied, such motors producing the torque required at each such point and thereby enabling the whole arrangement to be put into action.

This solution is fraught with several disadvantages, such as the high cost of the hydraulic units, of the hydraulic motors, of the connections, and of the umbilicals that have to feed the hydraulic unit down at the sea bottom with power from the support vessel at the surface, plus the problems brought about by a subsea system operating at high ambient (water) pressures.

Another solution also currently employed is to use remote-controlled vehicles. Upon development of technology for the use of such remote-controlled vehicles for jobs which until then had been done by divers, it became feasible and relatively cheaper to make greater use of the various kinds of equipment needed to produce oil and gas at depths quite a lot greater than before.

However, because of the complex geometry usually encountered in the equipment of the various sorts of subsea systems employed in the search for, and production of, oil and gas, there is always the risk of a remote-controlled vehicle becoming trapped in the course of its subsea work, as for instance when torque has to be applied at points difficult to access. Another drawback to consider is the delay incurred by the remote-controlled vehicle when torque has to be applied at such points of difficult access, which may even render a job impracticable because of the high cost involved.

The invention aims to provide an interface system for use at high static water pressures and operated by remote-controlled vehicles. All the usual points for the application of torque in subsea equipment are transferred to a panel at which terminals for the connection of torque-applying tools for remote-operated vehicles are standardized.

US-A-3518844 discloses a system of controlling several valves from a single location by means of a flexible drive comprising a torsionally rigid but flexible inner shaft and an outer sheath.

The present invention is characterised by the features of claim 1.

Torque-applying points are so placed as to enable jobs to be done with greater speed and safety, thereby reducing the length of time in use of a remote-controlled vehicle and the risk of it becoming trapped and being damaged. In addition, use can be made of various other means, as for instance divers' hand-operated tools.

The purposes, features and advantages of this invention will be better perceived with the aid of the following detailed description given, merely by way of example, with reference to the attached drawings, in which:-
FIGURE 1 is a front view of a mechanical support for a subsea pipeline showing sliding legs in both retracted and extended positions;
FIGURE 2 is a front view of a mechanical support for a subsea pipeline with an interface panel for using a remote-operated vehicle;
FIGURE 3 is a cross-sectional view of a terminal assembled on the panel of Figure 2; and
FIGURE 4 is a sketch showing connections between the panel and the points where torque is to be applied.

In order better to understand the invention the supporting system for rigid subsea pipelines previously referred to will be further described, thereby clearly showing advantages to be derived from the present invention.

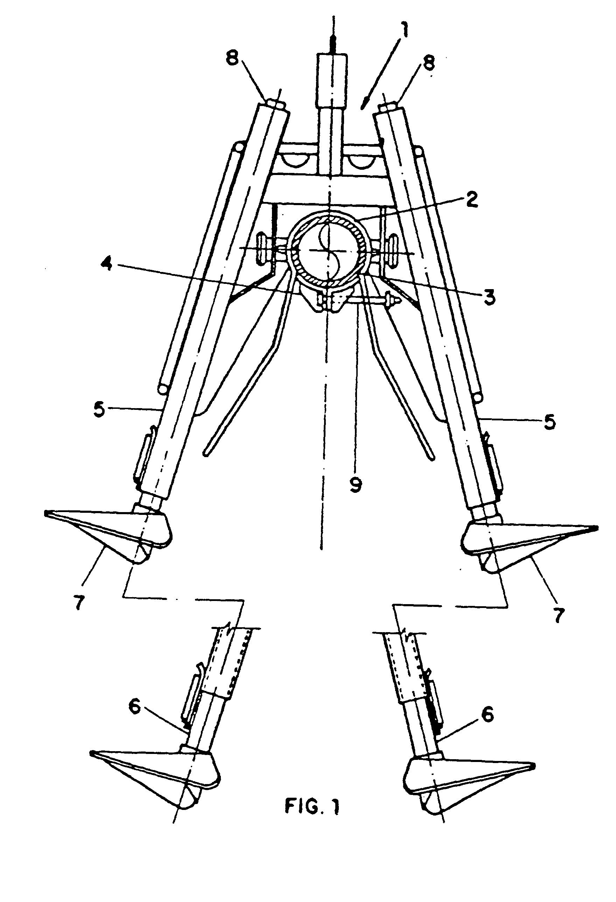

As can be seen from Figure 1, the usual kind of mechanical support for a subsea pipeline consists basically of a structure 1, and a pipeline fixing system 2 to which a pipeline 3 can be fixed by means of clamps 4. The assembly is also made up of fixed outer legs 5, sliding lower legs 6, and shoes 7, the sliding lower legs 6 being operated by screws 8, and the clamps 4 being operated by screws 9. Rotation of the screws 8 and 9 is effected in the usual way by a remote-operated vehicle.

In order to make it easier for the remote-operated vehicle to obtain access to the torque-applying screws 8 and 9 to which, as can be seen from Figure 1, access is difficult, the invention allows for the transfer of the torque-applying points to a panel 10 on which are standard connecting terminals 11 provided with releasable connectors 12, in this case a hexagon or octagon nut. The terminals 11 lie spaced apart from one another and are clearly marked according to the torque-applying points in order to facilitate access by the remote-operated vehicle.

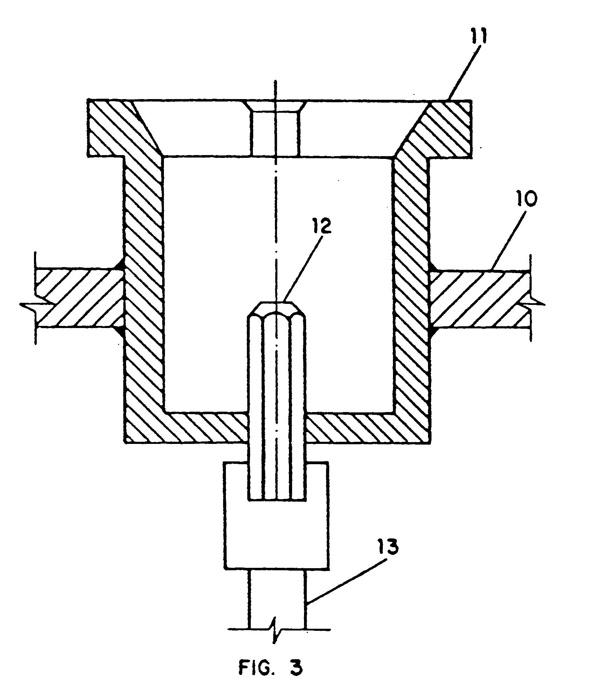

As can be seen from Figure 3, the sockets 12 are anchored, by their ends facing the rear side of the panel, to flexible torque-conveying drives which extend towards torque-applying points at screws 8 and 9 so as to link individually the terminal 11 to the torque-applying points 8 and 9. In this embodiment the flexible drives shown to convey the torque are non-twisting steel cables 13. Whenever possible such steel cables 13 should run inside conduits 14 to prevent the cables from becoming twisted.

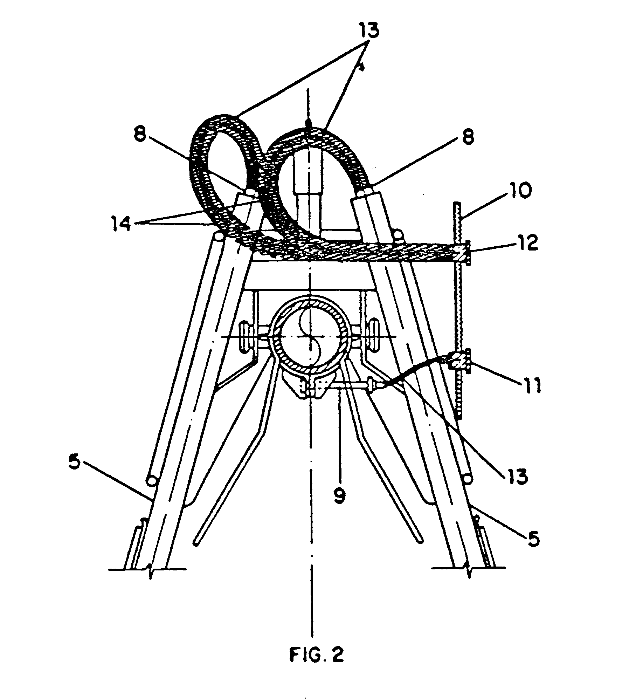

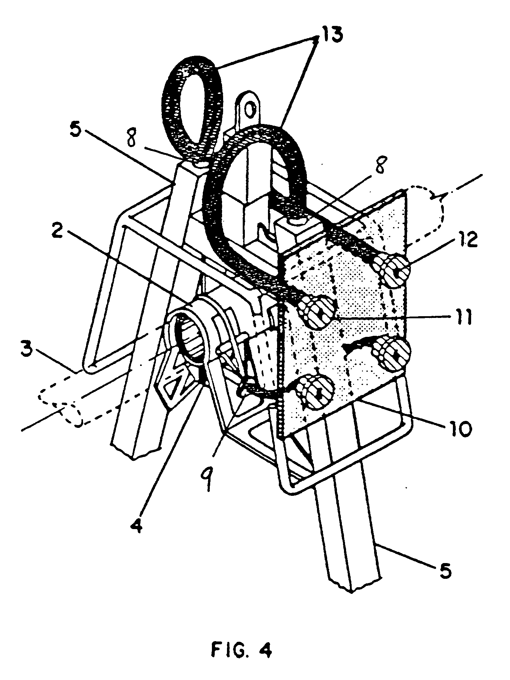

Figure 4 is a sketch of the apparatus of the invention showing transfer from torque-applying points (screws 8 and 9 of Figure 2) to the panel 10, thereby enabling a remote-operated vehicle to work without any repositioning, and avoiding the risk of the vehicle becoming trapped. In order to make the sketch easier to understand, only the main parts of the system have been shown.

Another advantage is that the working of the sockets need not be effected only by the special tool belonging to the remote-operated vehicle for such purpose, but can also be worked by various other kinds of device, such as by a hydraulically-operated wet Xmas tree tool, or by the jaw of most handling claws of remote-operated vehicles, or by divers, thereby enhancing the operational flexibility of such equipment.

It will be understood by those engaged in this type of work that use of an interface system for remote-operated vehicles is not confined to the rigid pipeline supports referred to above but the invention can also be employed for any other type of subsea equipement whenever torque has to be applied at predetermined points, or whenever it is desired to centralize the torque-applying points in order to optimize use of a remote-operated vehicle or of any other kind of operating system.

## Claims

1. An interface system for equipment having spaced torque apart application points, the system including:
- at least one panel (10) mounted on the equipment,
- a plurality of rotatable standard terminals (11) mounted on the panel,
- and a plurality of flexible devices (13) for transmitting torque, each said terminal (11) being connected by a respective said flexible device (13) to a corresponding torque application point, the panel providing one centralised location from which torque can be applied to the spaced apart torque application points through the respective said terminals and flexible devices; **characterized in that** said terminals are fitted with sockets (12) connected to said flexible devices (13), said sockets being adapted for being operated by a remote-operated vehicle, and **in that** said flexible devices are non-twisting steel cables , thereby allowing use of said interface system for operation in a high pressure environment at a deep sea location.

## Patentansprüche

1. Verbindungssystem für eine Apparatur mit voneinander beabstandeten Drehmoment-Ausübungspunkten, wobei das System aufweist:
- zumindest eine Platte (10), die auf der Apparatur angebracht ist,
- mehrere drehbare Standardanschlüsse (11), die auf der Platte angebracht sind,
- und mehrere flexible Einrichtungen (13) zum Übertragen von Drehmoment, wobei jeder Anschluss (11) mit einer jeweiligen flexiblen Einrichtung (13) an einem entsprechenden Drehmomehtausübungspunkt verbunden ist, wobei die Platte eine zentralisierte Stelle festlegt, ausgehende von welcher Drehmoment auf die voneinander beabstandeten Drehmoment-Ausübungspunkte durch die jeweiligen Anschlüsse und flexiblen Einrichtungen ausgeübt werden kann, **dadurch gekennzeichnet, dass** die Anschlüsse mit Sockeln (12) versehen sind, die mit den flexiblen Einrichtungen (14) verbunden sind, wobei die Sockel dazu ausgelegt sind, durch ein ferngesteuertes Fahrzeug betätigt zu werden, und dass die flexiblen Einrichtungen verdrehsichere Stahlkabel sind, wodurch die Verwendung eines Verbindungssystems zum Betrieb in einer Hochdruckumgebung an einem Unterseeort möglich ist.

## Revendications

1. Système d'interfaçage pour un équipement ayant des points d'application de couple espacés, ledit système comprenant :
- au moins un panneau (10) monté sur l'équipement,
- une pluralité d'embouts (11) standard rotatifs montés sur le panneau, et
- une pluralité de dispositifs flexibles (13) pour transmettre le couple, chacun desdits embouts (11) étant relié par l'un respectif desdits dispositifs flexibles (13) à un point correspondant d'application de couple, ledit panneau procurant un emplacement centralisé à partir duquel un couple peut être appliqué au point d'application de couple espacé via lesdits embouts respectifs et lesdits dispositifs flexibles respectifs,
**caractérisé en ce que** lesdits embouts sont accouplés avec des douilles (12) reliées audit dispositif flexible (13), lesdites douilles étant adaptées pour être actionnées par un véhicule télécommandé, et **en ce que** lesdits dispositifs flexibles sont des câbles d'acier non vriables, de façon à permettre l'utilisation dudit système d'interfaçage pour des opérations en environnement haute pression dans un site de haute mer.
